Europäisches Patentamt

European Patent Office

Office européen des brevets

(19)

(11) **EP 0 562 293 B1**

(12) **EUROPÄISCHE PATENTSCHRIFT**

(45) Veröffentlichungstag und Bekanntmachung des Hinweises auf die Patenterteilung:
**12.06.1996 Patentblatt 1996/24**

(51) Int Cl.6: **G01C 19/72**

(21) Anmeldenummer: **93102854.2**

(22) Anmeldetag: **24.02.1993**

(54) **Optischer Faserkreisel**

Optical fibre gyro

Gyroscope à fibre optique

(84) Benannte Vertragsstaaten:
**DE FR GB**

(30) Priorität: **27.03.1992 DE 4210058**

(43) Veröffentlichungstag der Anmeldung:
**29.09.1993 Patentblatt 1993/39**

(73) Patentinhaber: **TELDIX GmbH**
**D-69046 Heidelberg (DE)**

(72) Erfinder:
• **Hilpert, Klaus, Dipl.-Ing. (FH)**
**W-6800 Mannheim 31 (DE)**
• **Künstler, Peter, Dipl.-Ing.**
**W-6919 Bammental (DE)**

(74) Vertreter:
**TER MEER - MÜLLER - STEINMEISTER & PARTNER**
**Mauerkircherstrasse 45**
**81679 München (DE)**

(56) Entgegenhaltungen:
**EP-A- 0 424 663**        **WO-A-91/17411**
**DE-A- 4 003 326**

• **TECHNISCHES MESSEN TM Bd. 53, Nr. 9, 1986, MUNCHEN DE Seiten 345 - 349 K.BOEHM ET AL. 'Faseroptische Sensoren zur Messung von Drehraten'**
• **SOVIET JOURNAL OF QUANTUM ELECTRONICS. Bd. 13, Nr. 10, Oktober 1983, NEW YORK US, Seiten 1403 - 1405. S.V. BESSONOVA ET AL. 'Fiber-optic ring interferometer with a multimode waveguide'**
• **US Seiten 1403 - 1405 S.V.BESSONOVA ET AL. 'Fiber-optic ring interferometer with a multimode waveguide'**

**Beschreibung**

Die vorliegende Erfindung betrifft ein Verfahren und eine Anordnung zum Ermitteln der Amplituden derjenigen aus dem Ausgangssignal eines Faserringinterferometers selektierten Spektrallinien, aus denen die Sagnacphase ableitbar ist, wobei die Spektrollinien Harmonische der Modulationsfrequenz sind, mit der das in die Faser des Interferometers eingespeiste licht phasenmoduliert wird.

Wie die Sagnacphase mit drei oder vier aus dem Ausgangssignal eines Faserringinterferometers selektierten Spektrallinien hergeleitet werden kann, geht z.B. aus der DE 40 03 326 AI und der EP 04 24 663 AI hervor. Die Ableitung der Sagnacphase und schließlich der dazu proportionalen Drehrate des Faserringinterferometers erfolgt zweckmäßigerweise mit Hilfe von digital arbeitenden Schaltungsmitteln. Das Auftreten von elektrischen und optischen Störungen in der gesamten Schaltungsanordnung läßt sich nicht ganz vermeiden. Nachteilig dabei ist, daß diese Störungen die ermittelte Sagnacphase verfälschen.

Es ist nun die Aufgabe der vorliegenden Erfindung, ein Verfahren und eine Anordnung der eingangs genannten Art anzugeben, welche Verfälschungen der Sagnacphase möglichst weitgehend unterdrücken.

Erfindungsgemäß wird diese Aufgabe durch die Merkmale der Ansprüche 1 bzw. 3 gelöst. Eine zweckmäßige Weiterbildung des Verfahrens nach Anspruch 1 geht aus dem äbhangigen Anspruch 2 hervor.

Anhand eines in der Zeichnung dargestellten Ausführungsbeispiels wird nachfolgend die Erfindung näher erläutert.

Fig. 1 zeigt ein Zeigerdiagramm einer Spektrallinie und
Fig. 2 ein schematisches Blockschaltbild für die Herleitung einer Spektrallinienamplitude.

In der einen ringförmigen Lichtweg bildenden Lichtleitfaser eines Faserringinterferometers breiten sich zwei gegenläufige Lichtwellen aus, die nach dem Austritt aus der Lichtleitfaser in einem Strahlteiler miteinander interferieren. Die Interferenz hängt von der Drehrate ab, mit der die mindestens eine Windung bildende Lichtleitfaser gedreht wird. Der Drehrate ist die Phasendifferenz zwischen den beiden Lichtwellen, welche die Lichtleitfaser in entgegengesetzte Richtungen durchlaufen haben, proportional.

Diese Phasendifferenz, sie wird als Sagnac-Phase bezeichnet, läßt sich, wie der EP 04 24 663 A1 und der DE 40 03 326 A1 zu entnehmen ist, aus den Amplituden der Spektrallinien des aus der Lichtleitfaser austretenden Interferenzlichts bestimmen.

Das optische Ausgangssignal der Lichtleitfaser eines Faserringinterferometers wird in bekannter Weise zur Weiterverarbeitung in ein elektrisches Signal umgewandelt. Dieses elektrische Ausgangssignal $i(t)$ des optischen Faserringinterferometers ist, wie allgemein bekannt, gegeben durch:

$$i(t) = 2I_o \cos^2 \{1/2[2\varphi + \psi_o \sin 2\pi f_m t - \psi_o \sin 2\pi f_m (t-\tau)]\} \tag{1}$$

In dieser Beziehung gibt $I_o$ die Intensität des in die Lichtleitfaser eingespeisten Lichts, $\varphi$ die Sagnac-Phase, $\psi_0$ den Modulationsindex der mit der Frequenz $f_m$ durchgeführten sinusförmigen Phasenmodulation und $\tau$ die Laufzeit der Lichtwellen durch die Lichtleitfaser an.

Die zu ermittelnde Meßgröße, die Drehrate $\Omega$ des Faserringinterferometers, ist proportional zur Sagnac-Phase

$$\Omega = \frac{\lambda \cdot c}{8 \pi N \cdot A} \varphi \tag{2}.$$

Hier ist $\lambda$ 3-die Wellenlänge des in die Lichtleitfaser eingespeisten Lichts, c die Lichtgeschwindigkeit, A die von der Lichtleitfaser umschlossene Fläche und N die Anzahl der Lichtleitfaserwindungen.

Die Gleichung (2) zeigt also, daß die zu messende Drehrate $\Omega$ direkt von der Sagnac-Phase $\varphi$ abhängt. Es gilt also, die Sagnac-Phase $\varphi$ aus dem Ausgangssignal $i(t)$ des Faserringinterferometers zu ermitteln.

Mit den Additionstheoremen

$$\cos x/2 = \pm \sqrt{(1 + \cos x)/2} \,,$$

$$\sin x - \sin y = 2 \cos [(x + y)/2] \sin [(x - y)/2]$$

und den Abkürzungen
$\psi = \psi_o \sin \pi f_m \tau = \psi_o \sin \gamma$, wobei $\gamma = \pi f_m \tau$
folgt aus Gleichung (1)

$$i(t) = I_o \left\{1 + \cos[2\varphi(t) + 2\psi \cos(2\pi f_m t - \gamma)]\right\} \tag{3}$$

und daraus mit

$$\cos(x+y) = \cos x \cos y - \sin x \sin y$$

$$i(t) = I_O \left\{ 1 + \cos[2\psi(t)]\cos[2\psi\cos(2\pi f_m t - \gamma)] - \sin[2\psi(t)]\sin[2\psi\cos[2\pi f_m t - \gamma]] \right\} (4).$$

Mit Besselfunktionen der ersten Art läßt sich Gleichung (4) in eine für die Signalauswertung geeignete Form umschreiben.

$$i(t) = I_O \left\{ 1 + \cos 2\varphi \right.$$

$$[J_0(2\psi) + 2 \sum_{v=1}^{\infty} (-1)^v J_{2v}(2\psi) \cos 2v(2\pi f_m t - \gamma)]$$

$$\left. - \sin 2\psi[2 \sum_{v=0}^{\infty} (-1)^v J_{2v+1}(2\psi) \cos(2v+1)(2\pi f_m t - \gamma)] \right\} (5).$$

Dieses Ausgangssignal i(t) läßt sich in seine einzelnen Spektrallinien aufgegliedert folgendermaßen schreiben:

$$i(t) = I_O[1 + J_O(2\psi)\cos 2\psi] + \vec{A}_1 + \vec{A}_2 + \vec{A}_3 + \vec{A}_4 \ldots \text{mit}$$
$$\vec{A}_1 = -2I_O J_1(2\psi)\sin 2\psi \cos(2\pi f_m t - \gamma)$$
$$\vec{A}_2 = -2I_O J_2(2\psi)\cos 2\psi \cos 2(2\pi f_m t - \gamma) \quad (6)$$
$$\vec{A}_3 = +2I_O J_3(2\psi)\sin 2\psi \cos 3(2\pi f_m t - \gamma)$$
$$\vec{A}_4 = +2I_O J_4(2\psi)\cos 2\psi \cos 4(2\pi f_m t - \gamma)$$
$$\ldots$$
$$\ldots$$
$$\ldots$$

Hierin sind die Faktoren $J_n(2\psi)$ mit n = 0,1,2,... die Werte der Besselfunktionen 1. Art der n-ten Ordnung für das Argument $2\psi = 2\psi_o \sin \pi f_m \tau$.

Voraussetzung für die Bestimmung der Drehrate $\Omega(t)$ aus dem Ausgangssignal i(t) in Gleichung (6) ist, daß die zeitliche Änderung von $\Omega(t)$ so langsam erfolgt, daß für die über die Fouriertransformation berechenbare Bandbreite $B\varphi$ der Sagnac-Phase gilt:

$$B\varphi < f_m.$$

In diesem Fall läßt sich von den in (6) aufgeführten Spektrallinien, deren Frequenzen ganzzahlige Harmonische der Modulationsfrequenz $f_m$ sind, jede beliebige Spektrallinie mit geeigneten Filtern separieren und daraus die Sagnac-Phase $\varphi(t)$ bzw. die Winkelgeschwindigkeit $\Omega(t)$ bestimmen. Die an den Ausgängen solcher Filter abgreifbaren Amplituden der einzelnen in (6) angegebenen Spektrallinien sind dann:

$$A_1 = -2I_O J_1(2\psi)\sin 2\psi$$
$$A_2 = -2I_O J_2(2\psi)\cos 2\psi$$
$$A_3 = +2I_O J_3(2\psi)\sin 2\psi \qquad (7)$$
$$A_4 = +2I_O J_4(2\psi)\cos 2\psi$$
$$\ldots$$
$$\ldots$$

Wie aus diesen Amplituden der Spektrallinien die Sagnacphase berechnet werden kann, soll hier nicht näher beschrieben werden. Hierzu sei auf die zuvorgenannten EP 0 424 663A und DE 40 03 326 A1 verwiesen.

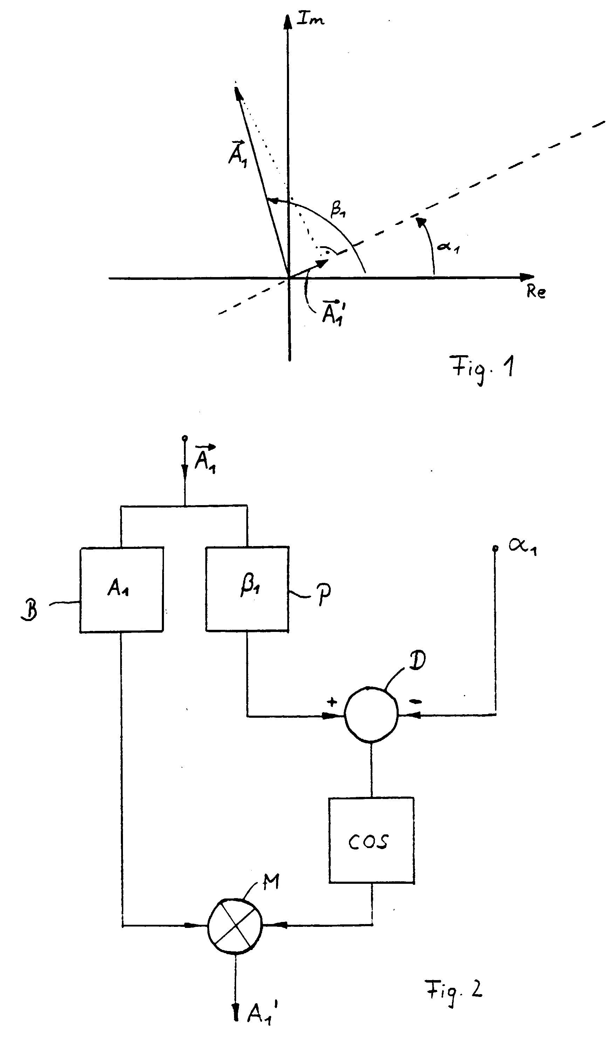

Jede der in Gleichung (6) aufgeführten Spektrallinien ist eine komplexe Größe, die sich als Zeiger in einer komplexen Ebene darstellen läßt. Die Fig. 1 zeigt ein Zeigerdiagramm in der komplexen Ebene am Beispiel der ersten Spektralline $\vec{A}_1$. Der Zeiger $\vec{A}_1$ mit der Amplitude $A_1$ und dem Phasenwinkel $\beta_1$ entspricht der tatsächlich aus dem Ausgangssignal des Faserringinterferometers selektierten Spektrallinie $\vec{A}_1$. Diese Spektrallinie $\vec{A}_1$ weist aufgrund von Störungen einen Phasenwinkel $\beta_1$ auf, der sehr stark von der unverfälschten Sollphase $\alpha_1$ abweicht. Für die Berechnung der Sagnacphase sollte lediglich der vektorielle Anteil $\vec{A}_1$'der Spektrallinie $\vec{A}_1$ herangezogen werden, welcher die Sollphase $\alpha_1$ hat, also der auf der in Fig. 1 eingezeichneten strichlierten Linie liegende Vektoranteil $\vec{A}_1$'.

Die Sollphase $\alpha_1$ für die erste Spektrallinie wird zuvor aus einer Spektrallinie abgeleitet, deren Amplitude von cos 2 $\varphi$ abhängt, das könnte,wie der Gleichung (7) zu entnehmen ist, die zweite oder die vierte Spektrallinie sein.

Wegen der Abhängigkeit vom cos 2 $\varphi$ sind die Amplituden dieser Spektrallinie $\vec{A}_2$, $\vec{A}_4$ gegenüber den von sin $2\varphi$ abhängigen Spektrallinien $\vec{A}_1$, $\vec{A}_3$ in dem interessierenden Drehratenbereich viel größer. Auf Spektrallinien $\vec{A}_2$, $\vec{A}_4$ mit großen Amplituden wirken sich Störungen weniger gravierend aus, so daß deren Phasen von den ungestörten Sollphasen auch nur geringfügig abweichen. Deshalb kann durchaus die gemessene Phase $\alpha_2$ bzw. $\alpha_4$ der Spektrallinie $\vec{A}_2$ bzw. $\vec{A}_4$ als Sollphase angenommen und als Referenz für die Bestimmung der Sollphasen $\alpha_1$, $\alpha_2$ für die anderen Spektrallinien $\vec{A}_1$ und $\vec{A}_3$ herangezogen werden.

Aus der Gleichung (6) geht hervor, daß

$$\alpha_1 = \frac{1}{2}\,(\alpha_2 + \pi)$$

$$\alpha_3 = \frac{3}{2}\,(\alpha_2 + \pi)$$

$$\alpha_4 = \frac{4}{2}\,(\alpha_2 + \pi)$$

ist, wenn z.B. die Phase $\alpha_2$ der zweiten Spektrallinie als Referenzphase genommen wird. So lassen sich also aus der gemessenen Sollphase $\alpha_2$ der zweiten Spektrallinie $\vec{A}_2$ die Sollphase der anderen für die Bestimmung der Sagnacphase herauszuziehenden Spektrallinie ableiten.

Das in Fig. 2 dargestellte Blockschaltbild verdeutlicht am Beispiel der ersten Spektrallinie $\vec{A}_1$, wie aus der gemessenen Linie $\vec{A}_1$ die für die Bestimmung der Sagnacphase brauchbare Amplitude $\vec{A}_1$' abgeleitet werden kann.

Die aus dem Ausgangssignal des Faserringinterferometers selektierte Spektrallinie $\vec{A}_1$ wird zunächst von einer betragbildenden Schaltung B und einem Phasendetektor P in seinen Betrag $A_1$ und seine Phase $\beta_1$ zerlegt. Aus der Phase $\beta_1$ und der Sollphase $\alpha_1$ wird in einer Schaltung D die Differenz $\beta_1 - \alpha_1$ gebildet. Eine weitere Schaltung COS ermittelt den Kosinus dieser Phasendifferenz. Schließlich bildet ein Multiplizierer M das Produkt aus dem Betrag $A_1$ der Spektrallinie $\vec{A}_1$ und aus dem Kosinus der Phasendifferenz, woraus die gesuchte Amplitude $\vec{A}_1$' resultiert. Alle diese Schaltungsmittel können an sich bekannte analoge Schaltungen sein oder sie werden durch digital arbeitende Prozessoren realisiert.

So wie hier an einer Spektrallinie erläutert, wird auch mit den anderen Spektrallinien verfahren. Allerdings bräuchte das beschriebene Verfahren nur auf die von sin $2\varphi$ abhängigen Spektrallinien $\vec{A}_1$, $\vec{A}_3$ angewendet zu werden, da, wie bereits oben gesagt, die von cos $2\varphi$ abhängigen Spektrallinien $\vec{A}_2$, $\vec{A}_4$ weniger störungsempfindlich sind.

**Patentansprüche**

1. Verfahren zum Ermitteln der Amplituden derjenigen aus dem Ausgangssignal eines Faserringinterferometers selektierten Spektrallinien, aus denen die Sagnacphase ableitbar ist, wobei die Spektrallinien Harmonische der Modulationsfrequenz sind, mit der das in die Faser des Interferometers eingespeiste Licht phasenmoduliert wird, dadurch gekennzeichnet, daß die jeweils selektierte Spektrallinie ($\vec{A}_1$) nach Betrag ($A_1$) und Phase ($\beta_1$) zerlegt wird, daß die Differenz zwischen dieser Phase ($\beta_1$) und einer für die betreffende Spektrallinie ($\vec{A}_1$') vorgegebenen Sollphase ($\alpha_1$) bestimmt wird, daß der Kosinus dieser Phasendifferenz gebildet wird und daß aus dem Kosinus der Phasendifferenz und dem Betrag der Spektrallinie das Produkt gebildet wird, welches dann die für die Bestimmung der Sagnacphase geeignete Spektrallinienamplitude ($A_1$') darstellt.

2. Verfahren nach Anspruch 1, dadurch gekennzeichnet, daß die Sollphase einer vom Kosinus der Sagnacphase abhängigen Spektrallinie ermittelt wird und daß aus dieser Sollphase die Sollphasender anderen für die Bestimmung der Sagnacphase benötigten Spektrallinien abgeleitet werden.

3. Anordnung zum Ermitteln der Amplituden derjenigen aus dem Ausgangssignal eines Faserringinterferometers selektierten Spektrallinien, aus denen die Sagnacphase ableitbar ist, wobei die Spektrallinien Harmonische der Modulationsfrequenz sind, mit der das in die Faser ds Interferometers eingespeiste Licht phasenmoduliert wird, dadurch gekennzeichnet, daß erste Mittel (B,P) vorhanden sind, welche von der jeweils selektierten Spektrallinie ($\vec{A}_1$) den Betrag ($A_1$) und die Phase ($\beta_1$) bestimmen, daß zweite Mittel (D) die Differenz zwischen dieser Phase

($\beta_1$) und einer für die betreffende Spektrallinie vorgegebenen Sollphase ($\alpha_1$) bilden, daß dritte Mittel (COS) vorhanden sind, welche den Kosinus der Phasendifferenz bestimmen und daß vierte Mittel (M) das Produkt aus dem Kosinus der Phasendifferenz und dem Betrag der Spektrallinie bilden, das die für die Bestimmung der Sagnacphase geeignete Spektrallinienamplitude ($A_1$') darstellt.

## Claims

1. Method for determining the amplitudes of those spectral lines, selected from the output signal of a fibre ring interferometer, from which the Sagnac phase can be derived, the spectral lines being harmonics of the modulation frequency with which the light fed into the fibre of the interferometer is phase-modulated, characterized in that the respectively selected spectral line ($\vec{A}_1$) is resolved into absolute value ($A_1$) and phase ($\beta_1$), in that the difference between this phase ($\beta_1$) and a desired phase ($\alpha_1$) prescribed for the relevant spectral line ($\vec{A}_1$) is determined, in that the cosine of this phase difference is formed, and in that the product is formed from the cosine of the phase difference and the absolute value of the spectral line, which product then represents the spectral line amplitude ($A_1$') suitable for determining the Sagnac phase.

2. Method according to Claim 1, characterized in that the desired phase of a spectral line dependent on the cosine of the Sagnac phase is determined, and in that the desired phases of the other spectral lines required for determining the Sagnac phase are derived from this desired phase.

3. Arrangement for determining the amplitudes of those spectral lines, selected from the output signal of a fibre ring interferometer, from which the Sagnac phase can be derived, the spectral lines being harmonics of the modulation frequency with which the light fed into the fibre of the interferometer is phase-modulated, characterized in that first means (B, P) are present which determine the absolute value ($A_1$) and the phase ($\beta_1$) of the respectively selected spectral line ($\vec{A}_1$), in that second means (D) form the difference between this phase ($\beta_1$) and a desired phase ($\alpha_1$) prescribed for the relevant spectral line, in that third means (COS) are present which determine the cosine of the phase difference, and in that fourth means (M) form the product from the cosine of the phase difference and the absolute value of the spectral line, which product represents the spectral line amplitude ($A_1$') suitable for determining the Sagnac phase.

## Revendications

1. Procédé pour déterminer les amplitudes des raies spectrales sélectionnées à partir du signal de sortie d'un interféromètre à fibre annulaire, à partir desquelles la phase Sagnac peut être dérivée, les raies spectrales étant des harmoniques de la fréquence de modulation avec laquelle la lumière, injectée dans la fibre de l'interféromètre, est modulée en phases, procédé caractérisé en ce que la raie spectrale respectivement sélectionnée ($\vec{A}_1$) est décomposée en montant ($A_1$) et en phase ($\beta_1$), en ce que la différence entre cette phase ($\beta_1$) et une phase prévue ($\alpha_1$) prédéfinie pour la raie spectrale considérée ($\vec{A}_1$) est déterminée, en ce que le cosinus de cette différence de phase est formé, et en ce que le produit du cosinus de la différence de phase et du montant de la raie spectrale est formé, qui représente alors l'amplitude des raies spectrales ($A_1$') appropriée pour la détermination de la phase Sagnac.

2. Procédé selon la revendication 1, caractérisé en ce que la phase prévue d'une raie spectrale dépendant du cosinus de la phase Sagnac est déterminée, et qu'à partir de cette phase prévue sont dérivées les phases prévues des autres raies spectrales nécessaires pour la détermination de la phase Sagnac.

3. Disposition pour déterminer les amplitudes des raies spectrales sélectionnées à partir du signal de sortie d'un interféromètre à fibre annulaire, à partir desquelles la phase Sagnac peut être dérivée, les raies spectrales étant des harmoniques de la fréquence de modulations avec laquelle la lumière injectée dans la fibre de l'interféromètre est modulée en phase, procédé caractérisé en ce qu'il est prévu des premiers moyens (B, P) qui déterminent le montant ($A_1$) et la phase ($\beta_1$) de la raie spectrale ($\vec{A}_1$) respectivement sélectionnée, en ce que des seconds moyens (D) forment la différence entre cette phase ($\beta_1$) et une phase prévue ($\alpha_1$) prédéfinie pour la raie spectrale considérée, en ce qu'il est prévu des troisièmes moyens (COS), qui déterminent le cosinus de la différence de phases, et en ce qu'un quatrième moyen (M) forme le produit du cosinus de la différence de phase et du montant de la raie spectrale, qui représente l'amplitude ($A_1$') des raies spectrales appropriée pour la détermination de la phase Sagnac.

Fig. 1

Fig. 2